# EUROPEAN PATENT SPECIFICATION

(11) **EP 1 048 131 B1**
(45) Date of publication and mention of the grant of the patent: **27.07.2005**
(21) Application number: 98951008.6
(22) Date of filing: 05.10.1998
(51) Int. Cl.: H04B 7/005

(54) **APPARATUS AND METHOD FOR OPTIMIZED POWER CONTROL**
VORRICHTUNG UND VERFAHREN ZUR OPTIMIERTEN SENDELEISTUNGSREGELUNG
APPAREIL ET PROCEDE ASSURANT UNE COMMANDE DE PUISSANCE OPTIMISEE

(30) Priority: 13.10.1997 US 62819 P; 13.10.1997 US 62821 P; 30.09.1998 US 164384
(43) Date of publication of application: 02.11.2000
(73) Proprietor: QUALCOMM INCORPORATED, San Diego, CA 92121-1714 (US)
(72) Inventor: VEMBU, Sridhar, Mountain View, CA 94043 (US)
(74) Representative: Dunlop, Hugh Christopher
(86) International application number: PCT/US1998/021253
(87) International publication number: WO 1999/019995

(56) References cited:
- EP-A- 0 330 166
- EP-A- 0 462 952
- EP-A- 0 548 939
- EP-A- 0 709 973
- US-A- 5 333 175

## Description

### I. Field of the Invention

The present invention relates generally to wireless communication systems. More particularly, the present invention relates to a novel and improved apparatus and method of power control for a wireless communication device.

### II. Related Art

Wireless communication networks are enjoying notable popularity in all aspects of business, industry and personal life. As such, portable, hand-held wireless communication devices have experienced widespread growth in recent years. Portable devices such as cellular and Personal Communication Services (PCS) phones are now commonplace for business and personal users alike. Additionally, advanced systems, such as satellite communications systems using portable, hand held and mobile phones, are currently being designed.

One design goal of hand-held communication devices is that of low power consumption. Low power consumption provides extended battery life and lower heat generation which increases device usefulness. Often times, lower power consumption also allows for, or leads to, smaller device sizes.

In CDMA communication systems, the transmitted power of signals within the system is controlled so as to maintain the amount of power required for any given communication link at a minimum level. This serves to maximize overall communication system capacity and maintain acceptable levels of mutual interference and signal quality. By controlling the transmitted signal power at or near the minimum level, interference with other communication devices or units is reduced. Examples of techniques for power control in such communication systems are found in US-A-5383219, US-A-5396516 and US-A-5267262.

One technique for decreasing the amount of power consumed by the device is to minimize the amount of power in the transmitted signal. Often times, this is accomplished by decreasing the amount of power in the transmitted signal as much as possible without adversely affecting the communication. One way in which this is accomplished is to decrease the amount of power as much as possible without allowing the signal-to-noise ratio (SNR) to fall below an acceptable level. When the SNR falls below the acceptable level, the power is increased to bring the SNR back up to an acceptable level.

This approach is advantageous because it allows a minimum amount of power to be used for communications under optimum conditions. When operating in less than optimum or ideal conditions, that is, inside a building, in bad weather, or such, transmission power is increased to maintain acceptable communications (for example, to maintain an acceptable SNR).

With some systems, such as cellular communications systems or other wireless communications systems for example, the wireless communication device, that is, a cellular phone, is controlled remotely. That is, part of the communication bandwidth between the device and a base station transceiver is dedicated to transferring command and status information. This command and status portion of the bandwidth is used to adjust the power of signals transmitted by the device. When the SNR of signals received by a base station falls below an acceptable level, the base station sends a command to the wireless device to increase its transmitted power. Similarly, if the SNR of received signals is well within acceptable limits, the base station commands the device to decrease transmitter power.

US-A-5333175 describes a TDMA radio communications system with uplink power control in which an RSSI threshold is adjusted upwards and downwards based upon a word error indicator.

EP-A-548939 describes power control in which thresholds are set for bit error rate (BER). These thresholds are adjusted up and down dependent on the number of times by which the BER exceeds a predetermined maximum allowable rate.

EP-A-0330166 and EP-A-0462952 describe other power control schemes which control power based on measured signal quality and received signal strength.

Most conventional systems, however, are limited in the manner in which they control the transmitter power for the wireless communication device. What is needed is apparatus and method for optimizing power control in a wireless communication system.

### SUMMARY OF THE INVENTION

The present invention is a novel and improved apparatus and method for optimizing the setting of a threshold level used to control power of a transmitter in a communication system. According to the invention, two parameters are used to determine whether or not the threshold level needs to be adjusted. These parameters are the operation of the system as compared to an established threshold and the performance of the system.

According to the invention, if the performance of the system is degraded and the system is operating at threshold, this is an indication that the threshold needs to be increased. As such, the invention increases the threshold. Accordingly, the power control portion of the communication system senses that the system is operating below threshold (i.e., the newly-increased threshold) and increases the system power according to a power control mode. As a result, the performance of the system is improved. If the performance is still degraded and the system is again operating at the new threshold, the threshold is increased further. This process continues until the system performance is once again returned to an acceptable level.

Note that if the performance of the system is degraded and the system is operating below threshold, this is an indication that the threshold does not need to be adjusted and that the power of the transmitter needs to be increased to bring the system up to threshold. In one embodiment, this is accomplished by increasing the power of the transmitter according to the power control mode of the communication system.

If system performance is better than required, this is an indication that the power of the transmitter may be greater than needed. Where the system performance is better than required, the invention determines if the system is operating above threshold. If so, the power of the transmitter is decreased according to the power control mode of the communication system. However, if the performance is better than required and the system is operating at or below threshold, this is an indication that the threshold can be lowered. As such, the invention lowers the threshold. Accordingly, the power control portion of the communication system senses that the system is operating above threshold and decreases the system power according to a power control mode. As a result, the power consumption of the transmitter is decreased. If the performance is still better than required and the system is still operating at or below the new threshold, the threshold is decreased further. This process continues until the system performance is once again returned to a normal level.

Note that if the performance of the system exceeds requirements and the system is operating above threshold, this is an indication that transmitter power should be lowered and that the threshold will likely not require adjustment.

In one embodiment, the threshold determinations are based on the signal-to-noise ratio (SNR) of the received signal at the receiver. A desired SNR level is established as the threshold level. The actual SNR of the received signal is compared to the threshold SNR to determine the operation of the system with respect to threshold.

In one embodiment, system performance is determined based on the error rate of the system. In alternative embodiments, other metrics are used to determine system performance such as frame errors, bit error rate, or some other indication of system performance.

An advantage of the invention is that power consumption is reduced as a result of the dynamic adjustment of the threshold. Lowering the threshold where signal quality is high allows the system to reduce transmitter power thereby reducing power consumption. Increasing the threshold where the signal quality is degraded allows the system to maintain an acceptable level of performance.

The features, objects, and advantages of the present invention will become more apparent from the detailed description set forth below when taken in conjunction with the drawings

### BRIEF DESCRIPTION OF THE DRAWINGS

The present invention is described with reference to the accompanying drawings. In the drawings, like reference numbers indicate identical or functionally similar elements. Additionally, the left-most digit of a reference number identifies the drawing in which the reference number first appears.
FIG. **1** is a block diagram illustrating an example communication system.
FIGS. **2**A and **2**B are diagrams illustrating example processes for switching between power control modes.
FIG. **3** is an operational flow diagram generally illustrating an example process of determining and selecting an appropriate power control mode.
FIG. **4** is an operational flow diagram illustrating a process by which the invention determines whether or not to increase the threshold level according to one embodiment of the invention.
FIG. **5** is an operational flow diagram illustrating a process by which the invention determines whether or not to increase the threshold level according to one alternative embodiment of the invention.

### DETAILED DESCRIPTION OF THE PREFERRED EMBODIMENTS

### I. Overview and Discussion of the Invention

The present invention is directed toward a system or apparatus and method for optimally determining a threshold level used to regulate the power of signals transferred within a communication system, or devices operating in the system, according to one or more power control modes. The manner in which this is accomplished is described below.

### II. Example Environment

Before describing the invention in great detail, it is useful to describe an exemplary environment in which the invention can be implemented. In a broad sense, the invention can be implemented in any wired or wireless communication system, especially one in which it is desirable to control the amount of power provided by a transmitter. Such environments include, without limitation, cellular communication systems, personal communication systems, satellite communication systems, and many other known systems.

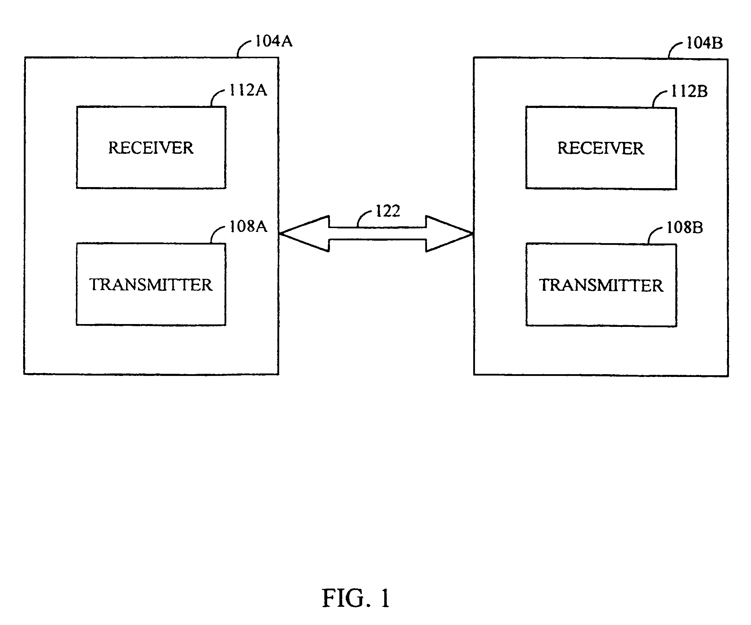

FIG. **1** is a diagram illustrating an example communication system **100.** Referring to FIG. **1**, the example communication system has two transceivers **104**a and **104**b**.** Transceivers **104**a and **104**b each have a transmitter **108**a and **108**b**,** and a receiver **112**a and **112**b**,** respectively.

Data or other information is transmitted from a transmitter **108** (**108**a**, 108**b) to a receiver **112** (**112**b**, 112**a) in another transceiver **104** (**104**b**, 104**a) for which the signal is intended, via transmission path **122.** In satellite, cellular, and other wireless communication systems, transmission path **122** is the air. However, the present invention is not limited to such applications, and transmission path **122** can be a wire or other signal transfer medium known in the art.

In some environments, transmission path **122** is a packetized data path in which the data are transmitted in data packets. This is usually the case where the information is in the form of digital data. In other environments, analog data are modulated onto a carrier and transmitted across transmission path **122.**

In the example of a cellular communication system, one transceiver **104** (**104**a**, 104**b) can be, or is located in, a hand-held or mobile cellular telephone and the other transceiver **104** (**104**b**, 104**a) is located in a base station at a local cell site that is providing service in the wireless device's or phone's current area, or physical location. In the example of a satellite communication system, one transceiver **104** (**104**a**, 104**b) can be a hand-held, mobile, or fixed transceiver (that is, a satellite telephone) and the other transceiver **104** (**104**b**, 104**a) is located in a gateway (or an earth station gateway). In the satellite communication system example, a satellite (not illustrated) is used to relay signals between transceivers **104** (**104**b**, 104**a)**,** as is well known in the art. Alternatively, in the satellite communication system example, one transceiver **104** can be located on-board the satellite itself.

The present invention is described in terms of this example environment. Description in these terms is provided for convenience only. It is not intended that the invention be limited to application in this example environment. In fact, after reading the following description, it will become apparent to a person skilled in the relevant art how to implement the invention in alternative environments, where the power of a wireless device is or can be remotely controlled.

### III. Power Control

In a communication system, power can be controlled using a power control scheme referred to as a "power control mode." For the purpose of this discussion, there are at least two modes of power control: "tracking mode" and "burst mode." Both the tracking mode and burst mode of power control provide increases in power when system performance falls below an acceptable level. However, in burst mode, the amount of the power increase is greater than that provided in the tracking mode.

Selection between the tracking mode and the burst mode is accomplished based on the system performance of the communication link. Specifically, if the system performance is within a preselected nominal range, the tracking mode is utilized. If, however, system performance falls below this nominal range, the burst mode of power control is utilized. Utilization of the burst mode brings the system performance to the nominal range more quickly than would otherwise be the case for the tracking mode.

Thus, the tracking mode is well suited to controlling power in nominal operating conditions where the SNR is varying by small amounts above and below the threshold level. In contrast, burst mode is well suited for controlling power in conditions where large power dropoffs are experienced. Such conditions can result where, for example, the communication path is blocked by a large building or other interfering structure or condition.

In one embodiment, system performance is based on the signal-to-noise ratio (SNR) of a signal transmitted by a transmitter (such as transmitter **108**a or **108**b). In this embodiment, the tracking mode increases the power in small increments when the signal-to-noise ratio (SNR) falls below an acceptable level. Burst mode also increases the power when the signal-to-noise ratio (SNR) falls below an acceptable level. However, in burst mode, the amount of the power increase is greater than that provided in the tracking mode. Selection between the two modes is accomplished based on how far the SNR falls below the acceptable level. That is, based on whether or not performance of the communication link is considered nominal. In another embodiment, system performance is based on receive signal strength independent of the SNR.

In an alternative embodiment, system performance is based on the number of frames received with errors. In this embodiment, if a receiver receives a large number of frames with errors in a given time period (or a specified number of consecutive frames with errors), the burst mode is selected for controlling power. If, on the other hand, the receiver receives only occasional frame errors, tracking mode is selected.

In one embodiment, the power increase for each mode is incremental. That is, for a given command or decision to increase the power, the power is increased by a preselected incremental amount. Power is not increased again until a subsequent command or decision is made to again increase the power. In an alternative embodiment, for a given command or decision to increase the power, the power increases gradually until a subsequent command is received to terminate the power increase. In either embodiment, burst mode provides a greater increase in power than the tracking mode. That is, the burst mode provides a larger incremental power increase in the first embodiment and a more rapid rate of increase in the second embodiment.

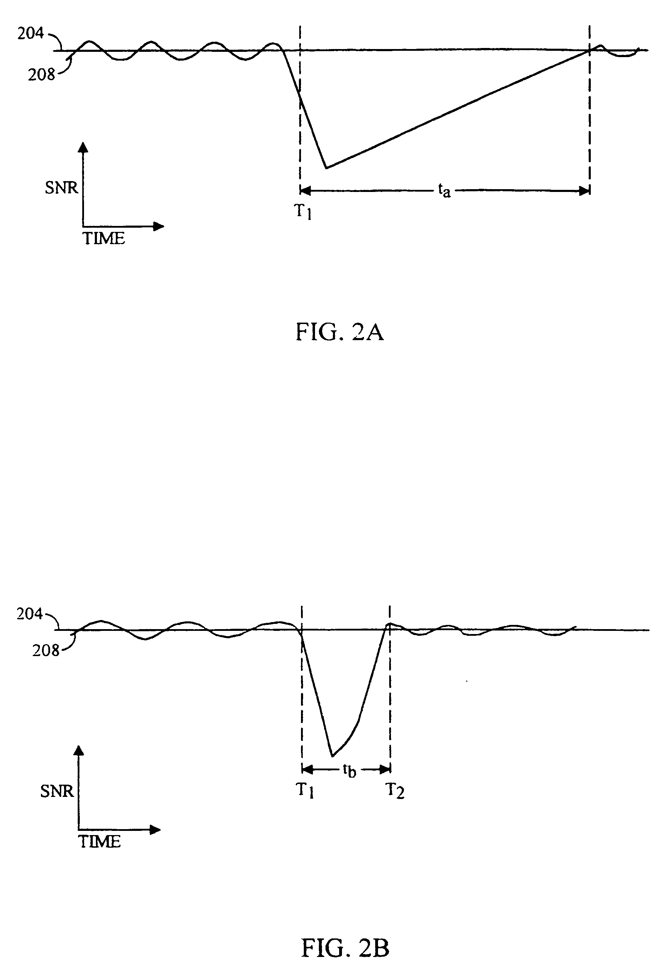

FIG. **2**A is a diagram illustrating an example operational scenario where power is controlled in only the tracking mode. In FIG. **2**A, the horizontal axis represents time and the vertical axis represents SNR. The threshold SNR is illustrated by horizontal line **204.** An example of the actual SNR of the transmitted signal is illustrated by the time-varying line **208.** In the example illustrated in FIG **2**A, the device is operating nominally up until a time T₁. In this region, SNR **208** of transmitter **108** is varying by a small amount about SNR threshold **204.** Adjustments are made to the transmitted power in small increments. When SNR **208** falls below threshold **204,** power is incrementally increased. Conversely, when SNR **208** rises above threshold **204,** power is incrementally decreased. Power adjustments are made using commands or control and operation techniques known in the art.

At time T₁, the SNR for signals traversing transmission path **122** drops significantly. This can occur where, for example, the path is obstructed. In the tracking mode, the power is increased incrementally to improve the SNR. However, because the power is only increased slightly for each increment in the tracking mode, a significant amount of time elapses before the SNR again reaches an acceptable level. This is illustrated by the time duration tₐ.

FIG. **2**B is a diagram illustrating an example operational scenario where power is selectively controlled in both the tracking mode and the burst mode. As with FIG. **2**A, in FIG. **2**B the horizontal axis represents time and the vertical axis represents SNR. The threshold SNR is illustrated by horizontal line **204.** An example of the actual SNR of the transmitted signal is illustrated by the time-varying line **208.** In the example illustrated in FIG. **2**B, the device is operating nominally up until time T₁. In this region, SNR **208** of a transmitter **108** transmitted signal is varying by a small amount about SNR threshold **204.** During this time period, transmitter **108** is operating in the tracking mode and adjustments are made to the transmitted power in small increments. When SNR **208** falls below threshold **204,** power is incrementally increased.

At time T₁, when transmission path **122** is obstructed and the SNR drops significantly, the transmitter power control mode is switched to the burst mode. As described above, in the burst mode the power increase is more significant than in the tracking mode. As such, the amount of time, t_{b}, that it takes for the SNR to return to an acceptable level is much shorter than the time tₜ required in the tracking mode. At time T₂ when the SNR **208** reaches threshold **204,** transmitter **108** is switched to tracking mode.

Note that it is generally not desirable to remain in the burst mode during nominal operating conditions. This is because a small decrease in SNR would result in a large increase in transmitter power in the burst mode. This would cause SNR **208** to rise well above threshold **204** due to an excess in transmitter power and consume an undue amount of power. This wastes power, and in systems that are power limited, or power affects capacity, this would prove very undesirable. It might also create an oscillatory behavior in some situations when the system tries to compensate and return to the threshold level, overshooting in each direction.

In one embodiment, selection of the power control mode is made by a receiver **112.** In this embodiment, receiver **112** (**112**a**, 112**b) instructs transmitter **108** (**108**b**, 108**a) (of opposite transceiver **104**) to switch power control modes when necessary. This can be done, for example, in the command portion of the transmitted signal. In an alternative embodiment, receiver **112** provides information back to transmitter **104** to enable transmitter **104** to make the decision whether or not to switch power control modes. For example, in this alternative embodiment, receiver **112** may send one or more indications such as a frame error indication, a bit error rate value, a SNR value, or some other indication of whether or not the performance of the system is at an acceptable level.

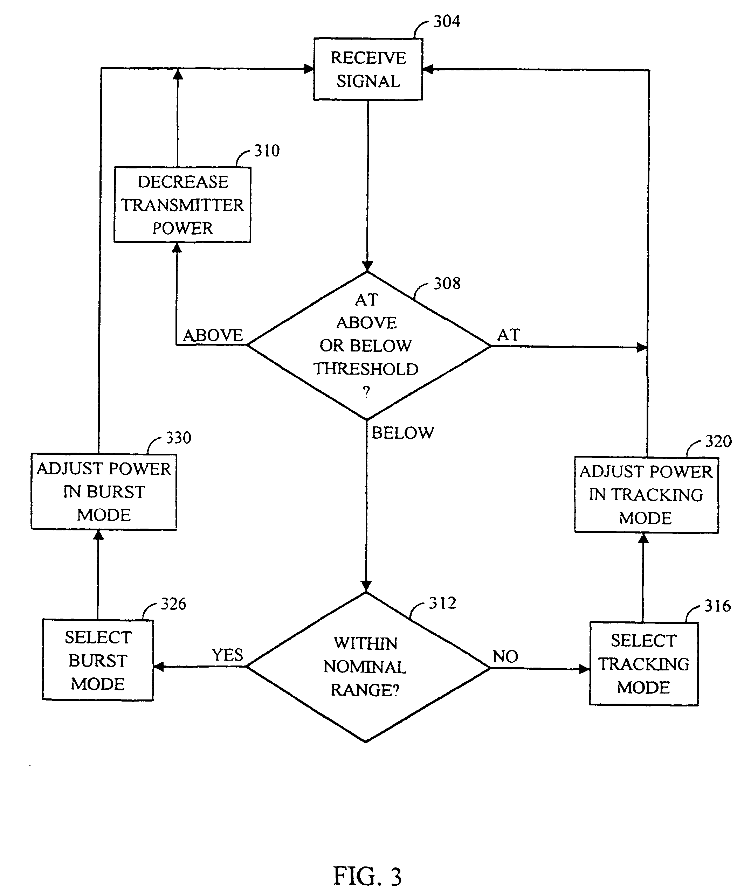

FIG. **3** is an operational flow diagram generally illustrating a process of determining and selecting an appropriate power control mode according to one embodiment of the invention. In a step **304,** receiver **112** (**112**a**, 112**b) receives a signal transmitted by transmitter **108** (**108**b**, 108**a)**.** In the example environment described above, the signal is transmitted across transmission path **122.**

Receiver **112** (**112**a**, 112**b) determines whether or not SNR **208** of the received signal is above, at or below preselected threshold **204.** This can be done regardless of the power control mode in which the communication system is operating. This decision is illustrated by a decision step **308.** If SNR **208** of the received signal is above threshold **204,** the power is adjusted down and the operation returns to step **304** where receiver **108** continues to receive the transmitted signal. This is illustrated by step **310** and flow line **362.**

If SNR **208** is at threshold **204** and, therefore, no adjustment is necessary, the operation returns to step **304** as illustrated by flow line **364.** In one embodiment, threshold **204** is not implemented as a single value, but instead encompasses an acceptable range of SNR values.

If, on the other hand, SNR **208** is below threshold, operation of the invention proceeds to a step **312.** In step **312,** receiver **112** determines whether or not the degradation in SNR **208** is greater than nominal. In other words, receiver **112** determines whether or not SNR **208** is more than an acceptable amount below threshold **204** and, therefore, the tracking mode is undesirable because it would take longer than desired to return the SNR **208** to threshold **204.**

If the degradation in SNR **208** is within nominal limits, the power control mode is selected as the tracking mode as illustrated by block **316.** If the power control mode is already the tracking mode, transmitter **108** remains in the tracking mode. However, if the current power control mode is burst mode, block **316** represents a change from burst mode to tracking mode. In a step **320,** the power of the transmitter is adjusted in the tracking mode. Receiver **112** continues to receive the transmission as illustrated by flow lines **366, 364.**

If the degradation in SNR **208** is beyond nominal limits, the power control mode selected is the burst mode as illustrated by step or block **326.** If the power control mode is already the burst mode, transmitter **108** remains in the burst mode. However, if the current power control mode is the tracking mode, step **326** represents a change from the tracking mode to the burst mode. In a step **330,** the power is adjusted in the burst mode. Receiver **112** continues to receive the transmission as illustrated by flow line **368.**

Thresholds and values below threshold can be chosen to suit a particular application. In one embodiment, threshold **204** is not a single value, but a range of values, such that as long as the received signal is within that range, the signal is said to be at threshold.

In one embodiment, the determination made in steps **308** and **312** is not made based on the SNR per se, but is instead made based on the number of frames received with errors. For example, in one mode of this embodiment, receiver **112** determines how many frames of the past *X* number of frames was received in error. In this example, if more than *Y* out of the last *X* frames were received with errors, this represents an error rate beyond an acceptable range and the preferred power control mode is the burst mode.

In an alternative mode of this embodiment, receiver **112** determines how many consecutive frames were received with errors. If the number of consecutive frames received with errors meets or exceeds a predetermined limit, this represents an error rate beyond an acceptable range and the preferred power control mode is the burst mode. Determining the number of frames received with errors can be accomplished using known techniques such as, for example, by way of a cyclic redundancy check (CRC) code.

In yet another embodiment, the invention looks at the bit error rate (BER) of the received signal. The BER rising above a threshold is analogous to the SNR **208** falling below threshold **204.** If the BER rises above a threshold by more than a predetermined amount, the system is no longer operating nominally and the preferred power control mode is burst mode.

It will become apparent to one skilled in the relevant art how other parameters can be utilized in conjunction with the present invention to determine whether the system is operating nominally.

In the embodiments described above, receiver **112** is described determining whether or not the system is at, above or below threshold and whether the system is operating nominally. In this embodiment, receiver **112** (**112**a**, 112**b) sends a command to transmitter **108** (**108**b**, 108**a) instructing transmitter **108** to change modes when appropriate. In alternative embodiments, receiver **112** simply provides telemetry to transmitter **108.** This telemetry provides transmitter **108** with sufficient information to determine whether the preferred power control mode is the tracking mode or burst mode.

In one configuration, the receiver provides two feedback indicators in the form of bits in a message or command. One bit is used to indicate the "tracking mode up/down command" and the other indicates "burst mode transmit level adjustment." It is up to the transmitter to decide what is acted upon or implemented. A decision is made by the transmitter based on factors, such as, but not limited to, the number of consecutive frame errors, etc. In this approach, a faster reaction time is provided for the system because significant events such as errors are immediately reported to the transmitter, at the cost of increased bandwidth consumed for power control purposes.

In an embodiment where receiver **112** commands transmitter 108 to switch power control modes, it is possible that the command will be lost during the transmission. This scenario can be handled using any of several different techniques. One technique uses acknowledgment messages to confirm receipt of the command.

A second technique is to simply continue sending the command. For example, if the system is operating out of nominal bounds, receiver **112** sends a command to track in the burst mode during each command frame until the system has returned to nominal operation. Because the command is repeated, and because this repetition is, in many cases, unnecessary, this technique consumes more bandwidth than is required. For this reason, this technique may be undesirable.

According to yet another technique, the implementation or not of a power control change or command is simply ignored. That is, there is no checking to determine whether transmitter 108 has indeed switched power control modes as commanded. Although this embodiment may seem counter-intuitive, it is actually a preferred embodiment. To understand why, consider two situations in which a command to switch modes can be sent by receiver **112** and not received by transmitter **108.** In a first situation, SNR **208** has decreased substantially and receiver **112** commands transmitter **108** to switch power control modes to the burst mode. If transmitter **108** does not receive this command, the only negative result is that transmitter **108** continues to control the power in the tracking mode. That is, it takes longer to return to nominal operation than would otherwise be the case if the command were received by transmitter **108.**

In a second situation, transmitter **108** is operating in the burst mode and the signal has returned to the nominal range. If transmitter **108** does not receive the command from receiver **112** instructing a change to the tracking mode, power may be increased greater than otherwise required. However, this is not a fatal error as the system continues to operate. The only disadvantage is that more power is being consumed than would otherwise be required.

After reading the above description, it would be apparent to one skilled in the relevant art how to implement power control mode selection using alternative modes of power control in place of or in addition to the tracking mode and the burst mode.

### IV. Threshold Optimization

As described above, most power control schemes rely on a comparison of a communication system parameter (i.e., such as SNR, power level, etc.) with a threshold value for that parameter. However, there are circumstances in which a communications system can be operating at or near threshold and still experience an unwanted level of errors or dropouts. In such circumstances, the established threshold level is too low to achieve acceptable communications.

One gauge used to judge the acceptability of the communication channel is called the "quality" of the signal. Where the signal is of high quality, the system can operate at or near a given threshold level without experiencing a significant decrease in system performance. However, where the signal quality is diminished, operation at or near the same threshold level can result in an unacceptable level of system performance. In other words, a communication system with a higher quality signal can operate at a lower threshold level and still maintain a given level of system performance.

One scenario which may affect the quality of a signal occurs when, for example, a portable or mobile communication device is operating in an area where there are obstructions to the signal. For example, consider a user traveling with a portable communication device from a rural farming area to a large city. While the user is in the rural area, there are few obstructions, if any. In this setting, the quality of the signal is high and operation at a given threshold is acceptable.

When the user enters the large city, several tall buildings obstruct the communication path. As a result of these obstructions, the signal reaching the receiver from the portable communication device will be of diminished quality. As a result, an increased number of errors are likely to occur even when the device is operating at threshold and performance of the system is diminished. To compensate for this reduced quality it would be desirable to increase the power of the portable communication device's transmitter so that operation is above threshold. However, if the portable communication device is operating with a conventional power control scheme, power will not be increased above threshold. Therefore, the present invention increases the threshold level, resulting in the power control mode increasing the transmitter's power.

The present invention increases the threshold level of the system so that the power control mode increases the power of the transmitter. According to the invention, the power control mode operates to maintain the signal level, here, the SNR, at or near the threshold level. Additionally, the invention monitors system performance (such as error rate, for example) to maintain and update the threshold level, thereby maintaining an acceptable level of performance.

In operation, the invention determines whether or not the threshold level needs to be revised. According to one embodiment, this determination is made based on two factors: the amount of difference between the signal level and the threshold, and on a predetermined metric of system performance such as, for example, the error rate of the system. If the signal level is at or near threshold, and system performance is unacceptable (an undue number of errors are received, for example), this may be an indication that the threshold needs to be increased. Similarly, if the signal is at or near threshold and the system performance is much better than expected (the error rate is much lower than an established tolerable level, for example), the threshold can be lowered, thereby conserving transmitter power.

Preferably, in one embodiment the signal level measurement is a comparison of SNR **208** with the SNR threshold **204;** and the metric used to determine system performance is an error determination made based on the number of errors in the received signal or on the number of frames received with errors over the last N frames. After reading this description it will become apparent to a person skilled in the relevant art that the present invention can be implemented with different parameters for signal strength and/or a different metric to determine system performance. For example, signal level can be signal strength without regard to the noise level or some other operating parameter. Additionally, the error determination used as the system performance metric can be made based on the number of errors in the received signal, the frame error rate, number of consecutive frame errors, bit error rate, or other factors.

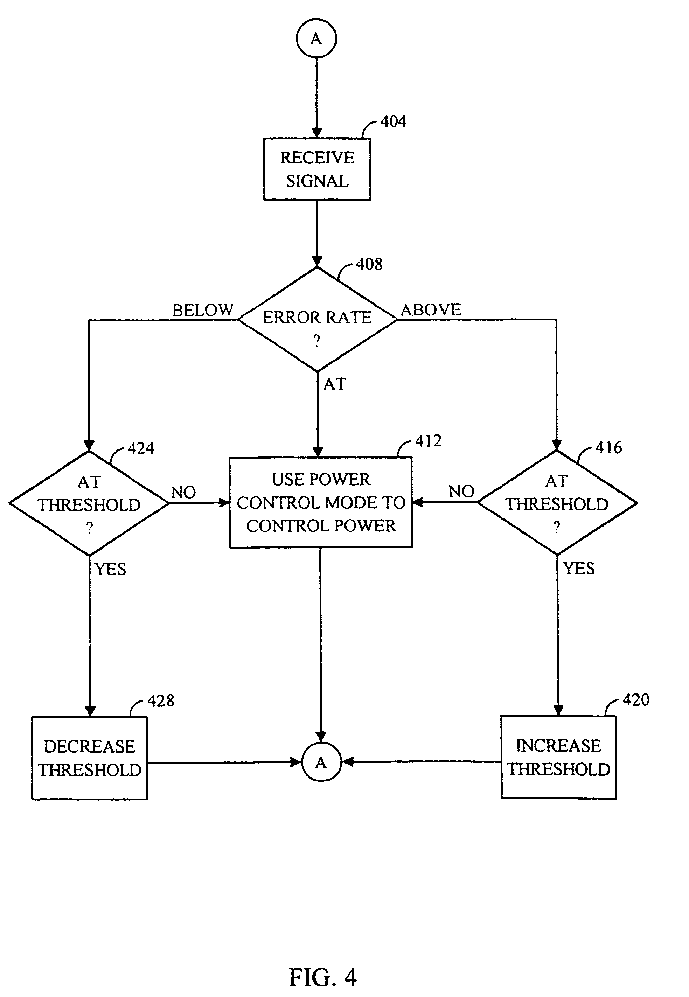

FIG. **4** is a diagram illustrating a process by which the invention determines whether or not to increase the threshold level according to one embodiment of the invention. Referring now to FIG. **4,** in a step **404,** receiver **112** receives a signal from transmitter **108** and evaluates the signal parameters. As described above, in the preferred embodiment, these parameters are SNR **208** and the number of frame errors received in the last N frames. For ease of description, the process is described in terms of these parameters even though other parameters can be utilized as described above.

In a step **408,** the system examines the number of frame errors occurring in the last N frames to determine whether the number of frame errors is acceptable. If the number of frame errors occurring in the last N frames is above an established number, this indicates that system performance is below an established level of acceptability. In one embodiment N = 300, although N could be chosen as any number.

If the number of frame errors occurring in the last N frames is at an expected level (or within an acceptable range), the system continues to operate as normal using the power control mode to control the power. This is illustrated by a step **412.**

If the number of frame errors occurring in the last N frames is above the established number (or range), the operation continues to a step **416** where the invention determines whether or not SNR **208** is nominal. That is, whether SNR **208** is sufficiently close to threshold **204.** In one embodiment, this determination is made by measuring the integrated difference between the measured received signal SNR **208** and threshold **204.**

If SNR **208** is at or near threshold **204** and the error rate is unacceptable (as determined above in step **408**)**,** this indicates that threshold **204** needs to be increased. This occurs in a step **420.**

However, if SNR **208** is below threshold **204** and the error rate is unacceptable (as determined above in step **408**)**,** this indicates that the power control mode is operating normally. Because it is likely that the condition of SNR **208** being below threshold **204** resulted in the unacceptably high error rate (determined in step **408** above), threshold **204** is not increased. As such, the system continues to operate as normal using the power control mode to control the power in step **412.**

Returning now to step **408,** if it is determined in step **408** that the number of frame errors occurring in the last N frames is below an expected number (or range), this is an indication that threshold **204** may be too high. Therefore, in a step **424** the system determines whether or not SNR **208** is at or near threshold **204.** In one embodiment, this determination is made by measuring the integrated difference between the measured received signal SNR **208** and threshold **204.**

If SNR **208** is above threshold, the power control mode will lower the power to maintain the system properly. However, if SNR **208** is at or near threshold and the error rate is better than expected, this indicates that threshold **204** can be lowered. This occurs in step **428.**

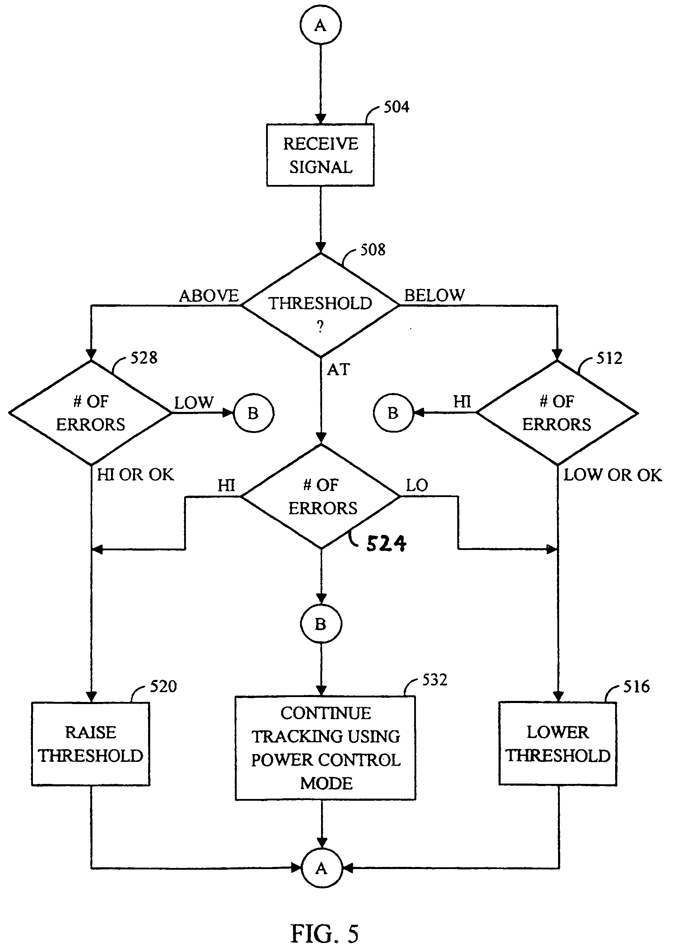

FIG. **5** is a diagram illustrating a process by which the invention determines whether or not to increase the threshold level according to one alternative embodiment of the invention. Referring now to FIG. **5,** in a step **504,** receiver **112** receives a signal from transmitter **108** and evaluates the signal parameters. As described above, in the preferred embodiment, these parameters are SNR **208** and the number of frame errors received in the last N frames. For ease of description, the process is described in terms of these parameters even though other parameters can be substituted as described above.

In a step **508,** the invention determines whether or not the system is operating at or sufficiently near threshold **204.** The invention next determines whether or not the number of errors is acceptable, above normal, or below normal.

If the error rate is above normal and the system is operating at or near threshold **204,** threshold **204** is increased as illustrated by steps **508, 524,** and **520.**

If the error rate is below normal and the system is operating at or near threshold, threshold **204** is lowered as illustrated by steps **508, 524,** and **516.**

If the error rate is normal and the system is operating nominally with respect to threshold, threshold **204** does not need to be adjusted, and the system continues to adjust power in the power control mode as needed. This is illustrated by steps **508, 524,** and **532.**

If the error rate is above normal and the system is operating above threshold **204,** threshold **204** is increased. This is illustrated by steps **508, 528,** and **520.**

If the error rate is below normal and the system is operating above threshold, threshold **204** is not adjusted, and the power is decreased according to the power control mode. This is illustrated by steps **508, 528,** and **532.**

If the error rate is below normal and the system is operating below threshold **204,** threshold **204** is lowered as illustrated by steps **508, 512,** and **516.**

If the error rate is above normal and the system is operating below threshold **204,** threshold **204** is not adjusted, and the power is increased according to the power control mode. This is illustrated by steps **508, 512,** and **532.**

### V. Conclusion

The previous description of the preferred embodiments is provided to enable any person skilled in the art to make or use the present invention. While the invention has been particularly shown and described with reference to preferred embodiments thereof, it will be understood by those skilled in the art that various changes in form and details may be made therein without departing from the scope of the invention.

## Claims

1. A method for adjusting a threshold level in a communication system having at least one mode for controlling the power of a transmitter in the communication system during system operation, comprising the steps of:
determining performance (408, 508) of the communication system based on a predetermined metric;
determining the power of the transmitter (404, 504) in the communication system in relation to the threshold of the communication system; **characterized by**
adjusting a value of the threshold (420, 428, 516, 520) based on said performance of the communication system and the power of the transmitter in relation to said threshold.

2. The method of claim 1, wherein said step of adjusting comprises the step of increasing said threshold of the communication system when the communication system is operating at or near threshold, and the performance of the communication system is below acceptable levels.

3. The method of claim 1, wherein said step of adjusting comprises the step of decreasing the threshold of the communication system when the communication system is operating at or near threshold and the performance of the communication system is above acceptable levels.

4. The method of claim 1, wherein said predetermined metric is one of the group of error rate of the communication system, frame error rate, number of consecutive frame errors, and bit error rate.

5. The method of claim 1, wherein said step of determining performance of the communication system further comprises the step of determining whether a parameter of the communication system is within a defined range.

6. The system of claim 5, wherein said parameter is chosen from the group comprising signal-to-noise ratio, received signal strength, frame error rate frequency, number of consecutive frame errors, and bit-error rate.

7. The method of claim 5, further comprising the step of selecting modes of power control based on said determination of said parameter being within a range.

8. The method of claim 7, having at least a first power control mode for controlling the power of a transmitter in the communication system during system operation in relatively small power steps and a second burst mode for controlling the power of the transmitter during system operation in relatively large power steps, wherein said first mode is selected when system performance is within a pre-selected nominal range and said second mode is selected when system performance falls outside said pre-selected nominal range.

9. The method of claim 7, further comprising the step of adjusting the power of the transmitter according to a selected power control mode of the communication system.

10. The method of claim 9, wherein said adjustments in power are incremental power increases.

11. The method of claim 7 or 8, wherein said step of selecting modes of power control is performed at the transmitter.

12. The method of claim 7 or 8, wherein said step of selecting modes of power control is performed at a receiver location and further comprises a step of transmitting a command from the receiver location to the transmitter to select a desired power control mode.

13. The method of claim 1, wherein said step of determining the power comprises determining whether the communication system is operating at or near threshold, and
said adjusting step comprises adjusting the value of the threshold based on an outcome of said step of determining whether the communication system is operating at or near threshold.

14. The method of claim 1, wherein said adjusting step comprises the steps of: adjusting the value of the threshold when said communication system is operating at or near threshold and the performance of the communication system is one of above and below acceptable levels; and otherwise
maintaining the value of the threshold.

15. The method of claim 1, further comprising the step of:
maintaining the value of the threshold when said performance of the communication system is below acceptable levels and the communication system is not operating at or near threshold.

16. The method of claim 1, wherein said adjusting step comprises the steps of:
adjusting the value of the threshold when said communication system is operating at or near threshold and the performance of the communication system is one of above and below acceptable levels, said communication system is operating below threshold and the performance of the communication system is one of above and at acceptable levels, or said communication system is operating above threshold and the performance of the communication system is one of below and at acceptable levels; and
otherwise maintaining the value of the threshold.

17. Apparatus for adjusting a threshold level in a communication system having at least one mode for controlling the power of a transmitter in the communication system during system operation, comprising:
means (408, 508) for determining performance of the communication system based on a predetermined metric;
means (404, 504) for determining a power of the transmitter in the communication system in relation to said threshold; and
means (420, 428, 516, 520) for adjusting a value of the threshold based on said performance of the communication system and the power of the transmitter in relation to said threshold.

18. The apparatus of claim 17, wherein said performance of the communication system is measured according to one or more of the group comprising signal-to-noise ratio, received signal strength, frame error rate frequency, number of consecutive frame errors, and bit-error rate.

19. The apparatus of claim 17, wherein said means for determining performance of the communication system comprises means for determining whether a transmitted signal is at, above or below a threshold level.

20. The apparatus of claim 17, wherein said means for determining performance of the communication system comprises means for determining whether a parameter of the communication system is within a defined range.

21. The apparatus of claim 20, wherein said parameter is chosen from the group comprising signal-to-noise ratio, received signal strength, frame error rate frequency, number of consecutive frame errors, and bit-error rate.

22. The apparatus of claim 20, further comprising means for selecting modes of power control based on said determination of said parameter being within a range.

23. The apparatus of claim 22, having at least a first power control mode for controlling the power of a transmitter in the communication system during system operation in relatively small power steps and a second burst mode for controlling the power of the transmitter during system operation in relatively large power steps, wherein said first mode is selected when system performance is within a pre-selected nominal range and said second mode is selected when system performance falls outside said pre-selected nominal range.

24. The apparatus of claim 23, further comprising means for adjusting the power of the transmitter according to a selected power control mode of the communication system.

25. The apparatus of claim 22 or 23, wherein said means for selecting modes of power control is located at the transmitter.

26. The apparatus of claim 22 or 23, wherein said means for selecting modes of power control is located at a receiver location and further comprising means for transmitting a command from the receiver location to the transmitter to select a desired power control mode.

27. The apparatus of claim 17, wherein said power determining means is adapted to determine whether the communication system is operating at or near threshold, and said means for adjusting is adapted to adjust the value of the threshold based on an output of said power determining means indicating whether the communication system is operating at or near threshold.

28. The apparatus of claim 17, wherein said adjusting means is adapted to:
adjust the value of the threshold when said communication system is operating at or near threshold and the performance of the communication system is one of above and below acceptable levels, and
otherwise maintain the value of the threshold.

29. The apparatus of claim 17, further comprising means for maintaining the value of the threshold when said performance of the communication system is below acceptable levels and the communication system is not operating at or near threshold.

30. The apparatus of claim 17, wherein said adjusting means is adapted to adjust the value of the threshold when said communication system is operating at or near threshold and the performance of the communication system is one of above and below acceptable levels, said communication system is operating below threshold and the performance of the communication system is one of above and at acceptable levels or said communication system is operating above threshold and the performance of the communication system is one of below and at acceptable levels, and otherwise maintain the value of the threshold.

## Patentansprüche

1. Verfahren zum Einstellen eines Schwellenpegels in einem Kommunikations- oder Nachrichtensystem mit mindestens einer Betriebsart zur Steuerung der Leistung eines Senders in dem Nachrichtensystem während des Systembetriebs, wobei die folgenden Schritte vorgesehen sind:
Bestimmung der Performance oder Leistungsfähigkeit (408, 508) des Nachrichtensystems basierend auf einer vorbestimmten Metrik;
Bestimmen der Leistung des Senders (404, 504) in dem Nachrichtensystem in Beziehung zu der Schwelle des Nachrichtensystems, **gekennzeichnet durch** Einstellen eines Wertes der Schwelle (420, 428, 516, 520) basierend auf der erwähnten Performance des Nachrichtensystems und der Leistung des Senders in Beziehung zu der Schwelle.

2. Verfahren nach Anspruch 1, wobei der Schritt des Einstellens den Schritt des Vergrößerns der erwähnten Schwelle des Nachrichtensystems aufweist, wenn das Nachrichtensystem auf oder nahe der Schwelle arbeitet und die Performance des Nachrichtensystems unterhalb akzeptabler Pegel liegt.

3. Verfahren nach Anspruch 1, wobei der Schritt des Einstellens den Schritt des Verminderns der Schwelle in dem Nachrichtensystem aufweist, wenn das Nachrichtensystem auf oder nahe der Schwelle arbeitet und die Performance des Nachrichtensystems oberhalb akzeptabler Pegel liegt.

4. Verfahren nach Anspruch 1, wobei die erwähnte vorbestimmte Metrik eine aus der folgenden Gruppe ist: Fehlerrate des Nachrichtensystems, Rahmenfehlerrate, Anzahl der aufeinander folgenden Rahmenfehler und Bitfehlerrate.

5. Verfahren nach Anspruch 1, wobei der Schritt des Bestimmens der Performance des Nachrichtensystems ferner den Schritt des Bestimmens umfasst, ob ein Parameter des Nachrichtensystems innerhalb eines definierten Bereichs liegt.

6. Verfahren nach Anspruch 5, wobei der Parameter aus der folgenden Gruppe ausgewählt wird: Signal zu Rauschverhältnis, empfangene Signalstärke, Rahmenfehlerratenfrequenz, Anzahl der aufeinander folgenden Rahmenfehler und Bitfehlerrate.

7. Verfahren nach Anspruch 5, wobei der Schritt der Auswahl der Betriebsarten der Leistungssteuerung auf der erwähnten Bestimmung des erwähnten Parameters innerhalb eines Bereichs liegend, basiert.

8. Verfahren nach Anspruch 7 mit mindestens einer ersten Leistungssteuerungsbetriebsart zur Steuerung der Leistung eines Senders in dem Nachrichtensystem während des Systembetriebs in relativ kleinen Leistungsschritten und eine zweite "Burst" oder Stoßbetriebsart zur Steuerung der Leistung des Senders während des Systembetriebs in relativ großen Leistungsschritten, wobei die erste Betriebsart ausgewählt wird, wenn die Systemperformance innerhalb eines vorgewählten Nominalbereichs liegt und wobei die zweite Betriebart ausgewählt wird, wenn die Systemperformance außerhalb des vorgewählten Nominalbereichs liegt.

9. Verfahren nach Anspruch 7, wobei ferner der Schritt des Einstellens der Leistung des Senders gemäß einer ausgewählten Leistungssteuerbetriebsart des Nachrichtensystems vorgesehen ist.

10. Verfahren nach Anspruch 9, wobei die erwähnten Leistungseinstellungen inkrementale Leistungserhöhungen sind.

11. Verfahren nach Anspruch 7 oder 8, wobei der Schritt der Auswahl der Betriebsarten der Leistungssteuerung am Sender ausgeführt wird.

12. Verfahren nach Anspruch 7 oder 8, wobei der Schritt der Auswahl der Betriebsarten der Leistungssteuerung an einer Empfängerstelle ausgeführt wird und ferner ein Schritt des Sendens eines Befehls von der Empfängerstelle zu dem Sender umfasst, um eine gewünschte oder Soll-Leistungsteuerbetriebsart auszuwählen.

13. Verfahren nach Anspruch 1, wobei der Schritt des Bestimmens der Leistung das Bestimmen umfasst, ob das Nachrichtensystem auf oder nahe der Schwelle arbeitet und wobei der Einstellschritt das Einstellen des Werts der Schwelle aufweist, basierend auf einer Ausgangsgröße des erwähnten Schrittes der Bestimmung, ob das Nachrichtensystem auf oder nahe der Schwelle arbeitet.

14. Verfahren nach Anspruch 1, wobei der erwähnte Einstellschritt folgende Schritte aufweist: Einstellen des Wertes der Schwelle, wenn das Nachrichtensystem auf oder nahe der Schwelle arbeitet und die Performance des Nachrichtensystems entweder oberhalb oder unterhalb akzeptabler Niveaus oder Pegel liegt; und ansonsten, Aufrechterhaltung des Wertes der Schwelle.

15. Verfahren nach Anspruch 1, wobei ferner der folgende Schritt vorgesehen ist: Beibehalten des Wertes der Schwelle dann, wenn die Performance des Nachrichtensystems unterhalb akzeptabler Pegel bzw. Niveaus liegt und das Nachrichtensystem nicht auf oder nahe der Schwelle arbeitet.

16. Verfahren nach Anspruch 1, wobei der Einstellschritt die folgenden Schritte aufweist: Einstellen des Wertes der Schwelle, dann wenn das Nachrichtensystem auf oder nahe der Schwelle arbeitet und die Performance des Nachrichtensystems entweder oberhalb oder unterhalb akzeptabler Pegel liegt,
wenn das Nachrichtensystem unterhalb der Schwelle arbeitet und die Performance des Nachrichtensystems oberhalb oder auf akzeptablen Pegeln liegt, oder das Nachrichtensystem oberhalb der Schwelle arbeitet und die Performance des Nachrichtensystems unterhalb oder auf akzeptablen Pegeln liegt; und
ansonsten Beibehalten des Wertes der Schwelle.

17. Vorrichtung zum Einstellen eines Schwellenpegels in einem Nachrichtensystem mit mindestens einer Betriebsart zur Steuerung der Leistung des Senders in dem Nachrichtensystem während des Systembetriebs, wobei folgendes vorgesehen ist:
Mittel (408, 508) zur Bestimmung der Performance des Nachrichtensystems, basierend auf einer vorbestimmten Metrik;
Mittel (404, 504) zur Bestimmung einer Leistung des Senders in dem Nachrichtensystem in Beziehung zu der Schwelle; und
Mittel (420, 428, 516, 520) zum Einstellen eines Wertes der Schwelle basierend auf der Performance des Nachrichtensystems und der Leistung des Senders in Beziehung zu der erwähnten Schwelle.

18. Vorrichtung nach Anspruch 17, wobei die Performance des Nachrichtensystems gemäß einer oder mehrerer Gruppen gemessen wird, die Folgendes aufweisen: Signal zu Rauschverhältnis, Empfangssignalstärke, Rahmenfehlerratenfrequenz, Anzahl aufeinander folgender Rahmenfehler und Bitfehlerrate.

19. Vorrichtung nach Anspruch 17, wobei die erwähnten Mittel zur Bestimmung der Performance des Nachrichtensystems Mittel aufweisen zur Bestimmung, ob ein gesendetes Signal auf, oberhalb oder unterhalb eines Schwellenpegels liegt.

20. Vorrichtung nach Anspruch 17, wobei die erwähnten Mittel zur Bestimmung der Performance des Nachrichtensystems Mittel aufweisen, ob ein Parameter des Nachrichtensystems innerhalb eines definierten Bereichs liegt.

21. Vorrichtung nach Anspruch 20, wobei der Parameter aus der folgenden Gruppe ausgewählt wird: Signal zu Rauschverhältnis, Empfangssignalstärke, Rahmenfehlerratenfrequenz, Anzahl der aufeinander folgenden Rahmenfehler und Bitfehlerrate.

22. Vorrichtung nach Anspruch 20, wobei ferner Mittel vorgesehen sind zur Auswahl der Betriebsarten der Leistungssteuerung, basierend auf der erwähnten Bestimmung des erwähnten Parameters innerhalb eines Bereichs.

23. Vorrichtung nach Anspruch 22, wobei mindestens eine erste Leistungssteuerbetriebsart vorgesehen ist, zur Steuerung der Leistung eines Senders im Nachrichtensystem während des Systembetriebs in relativ kleinen Leistungsschritten und eine zweite "Burst"- oder Stoßbetriebsart zur Steuerung der Leistung des Senders während des Systembetriebs in relativ großen Leistungsschritten, wobei die erwähnte Betriebsart ausgewählt wird, wenn die Systemperformance innerhalb eines vorgewählten Nominalbereichs liegt und wobei die zweite Betriebsart ausgewählt wird, wenn die Systemperformance außerhalb des vorgewählten Nominalbereichs liegt.

24. Vorrichtung nach Anspruch 23, wobei ferner Mittel vorgesehen sind zur Einstellung der Leistung des Senders gemäß einer ausgewählten Leistungssteuerbetriebsart des Nachrichtensystems.

25. Vorrichtung nach Anspruch 22 oder 23, wobei die Mittel zum Auswählen der Betriebsarten der Leistungssteuerung am Sender angeordnet sind.

26. Vorrichtung nach Anspruch 22 oder 23, wobei die erwähnten Mittel zur Auswahl der Betriebsarten der Leistungssteuerung am Empfängerort angeordnet sind, wobei ferner Mittel vorgesehen sind zum Senden eines Befehls von dem Empfängerort zu dem Sender, um eine gewünschte Leistungssteuerbetriebsart auszuwählen.

27. Vorrichtung nach Anspruch 17, wobei die Leistungsbestimmungsmittel geeignet sind zur Bestimmung, ob das Nachrichtensystem auf oder nahe der Schwelle arbeitet und wobei die Mittel zur Einstellung geeignet sind, den Wert der Schwelle einzustellen, und zwar basierend auf einer Ausgangsgröße der erwähnten Leistungsbestimmungsmittel, die anzeigen, ob das Nachrichtensystem auf oder nahe der Schwelle arbeitet.

28. Vorrichtung nach Anspruch 17, wobei die Einstellmittel geeignet sind, den Wert der Schwelle dann einzustellen, wenn das Nachrichtensystem auf oder nahe der Schwelle arbeitet und die Performance des Nachrichtensystems entweder oberhalb oder unterhalb akzeptabler Niveaus liegt, und wobei ansonsten der Wert der Schwelle beibehalten wird.

29. Vorrichtung nach Anspruch 17, wobei ferner Mittel vorgesehen sind zur Aufrechterhaltung des Werts der Schwelle dann, wenn die Performance des Nachrichtensystems unterhalb akzeptabler Pegel liegt und das Nachrichtensystem nicht auf oder nahe der Schwelle arbeitet.

30. Vorrichtung nach Anspruch 17, wobei die Einstellmittel geeignet sind. zur Einstellung des Wertes der Schwelle dann, wenn das Nachrichtensystem auf oder nahe der Schwelle arbeitet und die Performance des Nachrichtensystems entweder oberhalb oder unterhalb akzeptabler Pegel liegt,
wenn das Nachrichtensystem unterhalb der Schwelle arbeitet und die Performance des Nachrichtensystems oberhalb oder auf akzeptablen Niveaus oder Pegeln liegt oder das Nachrichtensystem oberhalb der Schwelle arbeitet und die Performance des Nachrichtensystems unterhalb oder auf akzeptablen Pegeln liegt, wobei ansonsten der Wert der Schwelle beibehalten wird.

## Revendications

1. Procédé pour régler un niveau de seuil dans un système de communication ayant au moins un mode pour commander la puissance d'un émetteur dans le système de communication pendant le fonctionnement du système, comprenant les étapes consistant à :
déterminer les performances (408, 508) du système de communication d'après une métrique prédéterminée ;
déterminer la puissance de l'émetteur (404, 504) dans le système de communication par rapport au seuil du système de communication ; **caractérisé par** l'étape consistant à :
régler une valeur du seuil (420, 428, 516, 520) d'après lesdites performances du système de communication et la puissance de l'émetteur par rapport audit seuil.

2. Procédé selon la revendication 1, dans lequel ladite étape de réglage comprend l'étape consistant à augmenter ledit seuil du système de communication lorsque le système de communication fonctionne au niveau du seuil ou près de celui-ci, et que les performances du système de communication sont en dessous de niveaux acceptables.

3. Procédé selon la revendication 1, dans lequel ladite étape de réglage comprend l'étape consistant à diminuer ledit seuil du système de communication lorsque le système de communication fonctionne au niveau du seuil ou près de celui-ci, et que les performances du système de communication sont au-dessus de niveaux acceptables.

4. Procédé selon la revendication 1, dans lequel ladite métrique prédéterminée est l'un des éléments du groupe comprenant le taux d'erreurs du système de communication, le taux d'erreurs de trames, le nombre d'erreurs de trame consécutives, et le taux d'erreurs sur les bits.

5. Procédé selon la revendication 1, dans lequel ladite étape de détermination des performances du système de communication comprend en outre l'étape consistant à déterminer si un paramètre du système de communication se trouve dans une plage définie.

6. Procédé selon la revendication 5, dans lequel ledit paramètre est choisi dans le groupe comprenant le rapport signal/bruit, la puissance du signal reçu, la fréquence du taux d'erreurs de trames, le nombre d'erreurs de trame consécutives, et le taux d'erreurs sur les bits.

7. Procédé selon la revendication 5, comprenant en outre l'étape consistant à sélectionner des modes de gestion de la puissance d'après ladite détermination de la présence dudit paramètre dans une plage.

8. Procédé selon la revendication 7, comprenant au moins un premier mode de gestion de la puissance pour commander la puissance d'un émetteur du système de communication pendant le fonctionnement du système par échelons de puissance relativement petits et un deuxième mode, ou mode à augmentation brusque, pour commander la puissance de l'émetteur pendant le fonctionnement du système par échelons de puissance relativement grands, ledit premier mode étant choisi lorsque les performances du système se trouvent dans une plage nominale présélectionnée et ledit deuxième mode étant choisi lorsque les performances du système se retrouvent à l'extérieur de ladite plage nominale présélectionnée.

9. Procédé selon la revendication 7, comprenant en outre l'étape consistant à ajuster la puissance de l'émetteur selon un mode de commande de puissance choisi du système de communication.

10. Procédé selon la revendication 9, dans lequel lesdits ajustements de puissance sont des augmentations de puissance incrémentales.

11. Procédé selon la revendication 7 ou 8, dans lequel ladite étape de sélection de modes de gestion de la puissance est exécutée dans l'émetteur.

12. Procédé selon la revendication 7 ou 8, dans lequel ladite étape de sélection de modes de gestion de la puissance est exécutée à l'emplacement d'un récepteur et comprend en outre une étape consistant à transmettre une commande de l'emplacement du récepteur à l'émetteur pour sélectionner un mode de gestion de puissance voulu.

13. Procédé selon la revendication 1, dans lequel ladite étape de détermination de la puissance comprend le fait de déterminer si le système de communication fonctionne au niveau du seuil ou près de celui-ci, et ladite étape de réglage comprend le fait d'ajuster la valeur du seuil d'après le résultat de ladite étape qui consiste à déterminer si le système de communication fonctionne au niveau du seuil, ou près de celui-ci.

14. Procédé selon la revendication 1, dans lequel ladite étape de réglage comprend les étapes consistant à :
régler la valeur du seuil lorsque ledit système de communication fonctionne au niveau du seuil, ou près de celui-ci, et que les performances du système de communication sont soit au dessus, soit en dessous, de niveaux acceptables ; et sinon
maintenir la valeur du seuil.

15. Procédé selon la revendication 1, comprenant en outre l'étape consistant à maintenir la valeur du seuil lorsque lesdites performances du système de communication sont sous des niveaux acceptables et que le système de communication ne fonctionne pas au niveau du seuil, ou près de celui-ci.

16. Procédé selon la revendication 1, dans lequel ladite étape de réglage comprend les étapes consistant à :
régler la valeur du seuil lorsque ledit système de communication fonctionne au niveau du seuil, ou près de celui-ci, et que les performances du système de communication sont soit au dessus, soit en dessous, de niveaux acceptables, lorsque ledit système de communication fonctionne sous le seuil et que les performances du système de communication sont soit au dessus, soit au niveau, de niveaux acceptables, ou lorsque ledit système de communication fonctionne au-dessus du seuil et que les performances du système de communication sont soit en dessous, soit au niveau, de niveaux acceptables ; et
sinon maintenir la valeur du seuil.

17. Appareil permettant de régler le niveau d'un seuil dans un système de communication ayant au moins un mode pour commander la puissance d'un émetteur dans le système de communication pendant le fonctionnement du système, comprenant :
un moyen (408, 508) permettant de déterminer les performances du système de communication d'après une métrique prédéterminée ;
un moyen (404, 504) permettant de déterminer la puissance de l'émetteur dans le système de communication par rapport audit seuil ; et
un moyen (420, 428, 516, 520) permettant de régler une valeur du seuil d'après lesdites performances du système de communication et la puissance de l'émetteur par rapport audit seuil.

18. Appareil selon la revendication 17, dans lequel lesdites performances du système de communication sont mesurées selon un ou plusieurs paramètre(s) du groupe comprenant le rapport signal/bruit, la puissance du signal reçu, la fréquence du taux d'erreurs de trames, le nombre d'erreurs de trame consécutives, et le taux d'erreurs sur les bits.

19. Appareil selon la revendication 17, dans lequel ledit moyen permettant de déterminer les performances du système de communication comprend un moyen permettant de déterminer si un signal émis est au niveau de, au-dessus ou en dessous d'un niveau de seuil.

20. Appareil selon la revendication 17, dans lequel ledit moyen permettant de déterminer les performances du système de communication comprend un moyen permettant de déterminer si un paramètre du système de communication se trouve dans une plage définie.

21. Appareil selon la revendication 20, dans lequel ledit paramètre est choisi dans le groupe comprenant le rapport signal/bruit, la puissance du signal reçu, la fréquence du taux d'erreurs de trames, le nombre d'erreurs de trame consécutives, et le taux d'erreurs sur les bits.

22. Appareil selon la revendication 20, comprenant en outre un moyen permettant de sélectionner des modes de gestion de la puissance d'après ladite détermination de la présence dudit paramètre dans une plage.

23. Appareil selon la revendication 22, ayant au moins un premier mode de gestion de la puissance pour commander la puissance d'un émetteur du système de communication pendant le fonctionnement du système par échelons de puissance relativement petits et un deuxième mode, ou mode à augmentation brusque, pour commander la puissance de l'émetteur pendant le fonctionnement du système par échelons de puissance relativement grands, ledit premier mode étant choisi lorsque les performances du système se trouvent dans une plage nominale présélectionnée et ledit deuxième mode étant choisi lorsque les performances du système se retrouvent à l'extérieur de ladite plage nominale présélectionnée.

24. Appareil selon la revendication 23, comprenant en outre un moyen permettant d'ajuster la puissance de l'émetteur selon un mode de commande de puissance choisi du système de communication.

25. Appareil selon la revendication 22 ou 23, dans lequel ledit moyen permettant de sélectionner des modes de gestion de la puissance se trouve dans l'émetteur.

26. Appareil selon la revendication 22 ou 23, dans lequel ledit moyen permettant de sélectionner des modes de gestion de la puissance se trouve à l'emplacement d'un récepteur et comprend en outre un moyen permettant de transmettre une commande de l'emplacement du récepteur à l'émetteur pour sélectionner un mode de gestion de puissance voulu.

27. Appareil selon la revendication 17, dans lequel ledit moyen de détermination de puissance est adapté pour déterminer si le système de communication fonctionne au niveau du seuil ou près de celui-ci, et ledit moyen de réglage est adapté pour ajuster la valeur du seuil d'après une sortie dudit moyen de détermination de puissance indiquant si le système de communication fonctionne au niveau du seuil, ou près de celui-ci.

28. Appareil selon la revendication 17, dans lequel ledit moyen de réglage est adapté pour ajuster la valeur du seuil lorsque ledit système de communication fonctionne au niveau du seuil ou près de celui-ci et que les performances du système de communication sont soit au dessus, soit en dessous, de niveaux acceptables, et sinon pour maintenir la valeur du seuil.

29. Appareil selon la revendication 17, comprenant en outre un moyen permettant de maintenir la valeur du seuil lorsque lesdites performances du système de communication sont en dessous de niveaux acceptables et que le système de communication ne fonctionne pas au niveau du seuil ou près de celui-ci.

30. Appareil selon la revendication 17, dans lequel ledit moyen de réglage est adapté pour ajuster la valeur du seuil lorsque ledit système de communication fonctionne au niveau du seuil ou près de celui-ci et que les performances du système de communication sont soit au dessus, soit en dessous, de niveaux acceptables, lorsque ledit système de communication fonctionne sous le seuil et que les performances du système de communication sont soit au dessus, soit au niveau, de niveaux acceptables, ou lorsque ledit système de communication fonctionne au-dessus du seuil et que les performances du système de communication sont soit en dessous, soit au niveau, de niveaux acceptables, et sinon pour maintenir la valeur du seuil. sinon maintenir la valeur du seuil.
